(19) Europäisches Patentamt
European Patent Office
Office européen des brevets

(11) **EP 1 295 472 B1**

(12) **FASCICULE DE BREVET EUROPEEN**

(45) Date de publication et mention
de la délivrance du brevet:
**30.09.2009 Bulletin 2009/40**

(51) Int Cl.:
***H04N 5/445*** *(2006.01)*

(21) Numéro de dépôt: **01949544.9**

(86) Numéro de dépôt international:
**PCT/FR2001/002037**

(22) Date de dépôt: **27.06.2001**

(87) Numéro de publication internationale:
**WO 2002/001863 (03.01.2002 Gazette 2002/01)**

(54) **METHODE DE RECEPTION ET DE VISUALISATION DE SEQUENCES D'EMISSIONS AUDIOVISUELLES A THEME, ET RECEPTEUR POUR LA MISE EN OEUVRE DE LA METHODE**

EMPFANGSVERFAHREN UND ANZEIGE VON SEQUENZEN MIT AUDIOVISUELLEN THEMESENDUNGEN, UND EMPFÄNGER ZUR DURCHFÜHRUNG DES VERFAHRENS

METHOD FOR RECEIVING AND DISPLAYING THEMATIC AUDIO-VISUAL PROGRAMME SEQUENCES, AND RECEIVER THEREFOR

(84) Etats contractants désignés:
**AT BE CH CY DE DK ES FI FR GB GR IE IT LI LU MC NL PT SE TR**

(30) Priorité: **27.06.2000 FR 0008240**

(43) Date de publication de la demande:
**26.03.2003 Bulletin 2003/13**

(60) Demande divisionnaire:
**06110263.8**

(73) Titulaire: **Thomson Licensing**
**92100 Boulogne-Billancourt (FR)**

(72) Inventeurs:
• **SCHMOUKER, Philippe**
**Thomson Multimédia**
**F-92648 Boulogne (FR)**
• **LEGALLAIS, Yvon**
**Thomson Multimedia**
**F-92648 Boulogne (FR)**
• **PERROT, Sébastien**
**Thomson Multimedia**
**F-92648 Boulogne (FR)**

(74) Mandataire: **Kohrs, Martin et al**
**Thomson,**
**46, quai Alphonse Le Gallo**
**92648 Boulogne Cedex (FR)**

(56) Documents cités:
EP-A- 0 967 804          WO-A-00/33197
WO-A-99/52285          WO-A-99/66719

**EP 1 295 472 B1**

**Description**

L'invention concerne une méthode de réception et de visualisation d'émissions audiovisuelles diffusées par un émetteur à destination de récepteurs et plus particulièrement lorsque les émissions sont sélectionnables en fonction d'un critère déterminé. L'invention concerne également les récepteurs pour la mise en oeuvre de la méthode.

L'invention s'applique plus particulièrement aux récepteurs/décodeurs de télévision numérique. Le réseau diffuse des émissions audiovisuelles plus communément appelées « événements », ainsi que des données destinées à les référencer. Ces données sont par exemple définies dans les spécifications DVB-SI ('Digital Video Broadcast - specification for Service Information') ou encore 'diffusion de vidéo numérique - spécification des Données de Service' EN 300 468 V1.3.1 (éditée par l'ETSI). Elles se présentent sous la forme de tables et de descripteurs qui décrivent les objets émis sur le réseau de diffusion. Un service est une suite ininterrompue d'événements diffusés sur un flux déterminé.

Le standard DVB-SI définit notamment le format de tables suivantes telles que : NIT, SDT, EIT et éventuellement BAT. La table NIT donne la structure générale du réseau et indique la liste des flux de transport et des services diffusés. La table SDT donne des informations supplémentaires relatives aux services, par exemple le nom en clair d'un service. La table EIT indique une liste d'événements pour chaque service, et notamment les événements en cours de diffusion. La table BAT contient des informations sur plusieurs services regroupés en un bouquet, ces services peuvent être issus de plusieurs réseaux de diffusion.

A l'aide des données contenues dans ces tables, le récepteur connaît le contenu général des émissions audiovisuelles diffusées par le réseau. L'utilisateur peut ainsi rechercher des émissions et des services en fonction de certains critères, tels que le thème.

Les programmes télévisés sont souvent entrecoupés par des séquences relativement courtes composées par exemple de flashs de publicité, ou de flashs d'information, ou encore d'un clip vidéo, ou diverses émissions audiovisuelles dont les durées varient d'une dizaine de secondes à plusieurs minutes. Ces séquences sont diffusées, soit entre deux événements, soit pendant un événement. L'utilisateur peut choisir l'événement qu'il regarde, c'est l'événement « courant » diffusé par le service « courant » mais il ne choisit pas le contenu des séquences. Les émissions courtes composant la séquence n'ont pas de thème en rapport avec l'événement courant. De ce fait, le spectateur peut se lasser de ces séquences dont le contenu l'intéresse globalement peu. Il pourrait être enclin à changer de services. La présente invention permet d'offrir à l'utilisateur des séquences l'intéressant d'avantage.

Le document EP 0 967 804 décrit une méthode pour afficher des messages publicitaires transmis sur une pluralité de canaux transmis dans un réseau de diffusion. Le récepteur possède un profil d'utilisateur et compare ses données de profil à des descripteurs caractérisant chaque canal transmettant des messages publicitaires. Une plage publicitaire est définie dans le programme sélectionné par l'utlisateur et au moment défini par cette plage, le récepteur commute vers le canal publicitaire pour reproduire un contenu publicitaire adapté au profil de l'utilisateur. Pour résoudre les problèmes de synchronisation lors de la commutation, il est prévu de rallonger ou de diminuer dans une faible proportion la vitesse de reproduction des contenus audiovisuels.

L'invention telle comme revendiquée dans les revendications 1, 2 et 6 a pour objet un procédé de visualisation d'émissions audiovisuelles émises par un central et reçues par un récepteur de télévision, des émissions d'un premier type étant diffusées sur un premier service de diffusion et sélectionnables par l'utilisateur, le procédé comportant au niveau du récepteur :

- une première étape de visualisation d'une émission d'un second type extrait d'un second service de diffusion sélectionné par le récepteur,
- une seconde étape de visualisation d'au moins une émission d'un premier type commençant à un premier moment spécifié par le central,

et caractérisé en ce qu'il comporte une troisième étape de visualisation d'une émission de remplissage, la dite émission étant visualisée à la suite de la visualisation de la seconde émission et s'arrêtant au début de la visualisation de la première émission.

Il faut tout de suite noter que les émissions audiovisuelles concernées par la présente invention peuvent être fournies aussi bien par un réseau unidirectionnel que bidirectionnel. Les émissions de second type sont diffusées en permanence sur plusieurs services correspondant chacun à un thème particulier. A un instant précis de l'événement courant, les données sélectionnées pour l'affichage sont commutées du service courant vers le service diffusant des émissions de second type. Le diffuseur spécifie la durée de visualisation des émissions du second type. Lorsque cette durée est écoulée, le récepteur commute la visualisation sur le service courant. Le récepteur sélectionne le service diffusant les émissions du second type. La séquence diffusée dans le service courant est ainsi remplacée par une séquence d'émissions de second type dont les thèmes correspondent mieux à un critère propre au récepteur. La diffusion des différentes émissions de second type n'est pas synchronisée avec les séquences spécifiées dans les signaux d'annonce, ce qui généralement entraîne la troncature intempestive d'au moins une émission de second type, au début et/ou à la fin de la séquence. De plus, les temps de commutation ne sont pas négligeables et de ce fait, peuvent entraîner l'apparition d'un écran noir pendant quelques instants. Pour éviter cela la présente invention prévoit de remplacer l'écran noir par une émission de remplissage, ce qui permet de supprimer toutes discontinuités du programme audiovisuel. Le récepteur affiche une émission de remplissage au début et/ou à la fin de la séquence.

Selon un mode de réalisation, ce critère de sélection des émissions de remplisage correspond au profil de l'utilisateur.

Le signal d'annonce contient une indication temporelle du début de la séquence. Selon un mode particulièrement simple de réalisation, le décodeur commute du service courant vers un service à thème à la suite de la réception du signal d'annonce.

Selon un mode particulier de réalisation, le récepteur est doté d'une mémoire d'enregistrement d'émissions audiovisuelles pour le stockage en temps réel de l'émission de second type correspondant aux critères mémorisés dans le récepteur. L'émission en cours d'enregistrement est visualisée au début de la séquence publicitaire.

L'invention a également pour objet un récepteur d'émissions audiovisuelles comportant un moyen de réception de données diffusées à partir d'un réseau constitué au moins d'un premier service diffusant des émissions d'un premier type sélectionnables par l'utilisateur et d'une pluralité de seconds services diffusant des émissions d'un second type, d'un moyen de commutation d'un service à un autre service et un moyen pour envoyer les émissions vers un organe de visualisation, caractérisé en ce qu'il comprend un moyen pour intercaler une émission de remplissage entre une émission d'un second type et une émission d'un premier type reçue du réseau.

D'autres caractéristiques et avantages de la présente invention ressortiront de la description des exemples de réalisation qui vont suivre, pris à titre d'exemples non limitatifs, en référence aux figures annexées dans lesquelles :

- la figure 1 représente un récepteur mettant en oeuvre l'invention,
- la figure 2 montre un exemple d'apparence d'écran pour la programmation du mécanisme d'affichage,
- la figure 3 représente le schéma du mécanisme de commutation des services selon l'invention,
- les figures 4 représentent des chronogrammes d'émission et de visualisation des émissions selon un mode préféré de réalisation,
- les figures 5 représentent des chronogrammes de diffusion, de mémorisation et de visualisation à l'écran d'émissions selon un perfectionnement,
- la figure 6 représente un exemple d'apparence d'écran pour la programmation des différents thèmes attendus par un utilisateur.

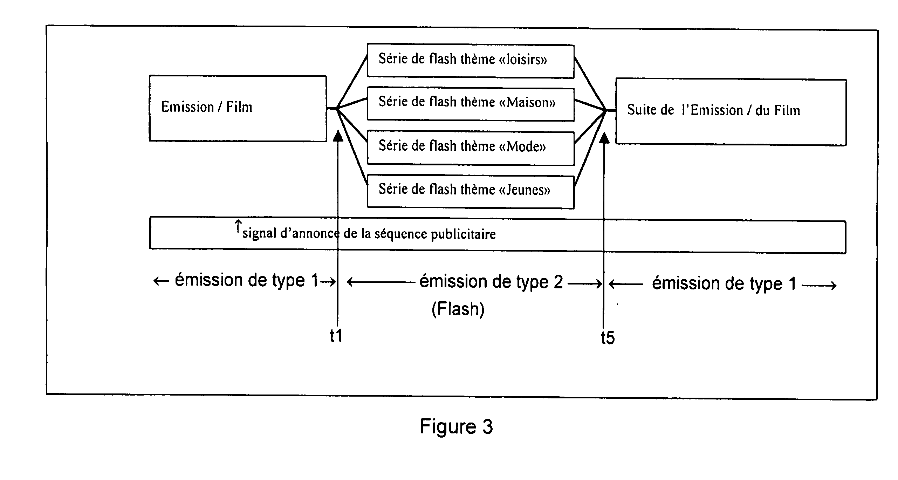

On décrira tout d'abord un récepteur selon l'invention, puis, comme le représente la figure 3, le mécanisme de commutation vers les services diffusant des émissions du second type. Et enfin, des perfectionnements et des variantes de réalisation seront décrits.

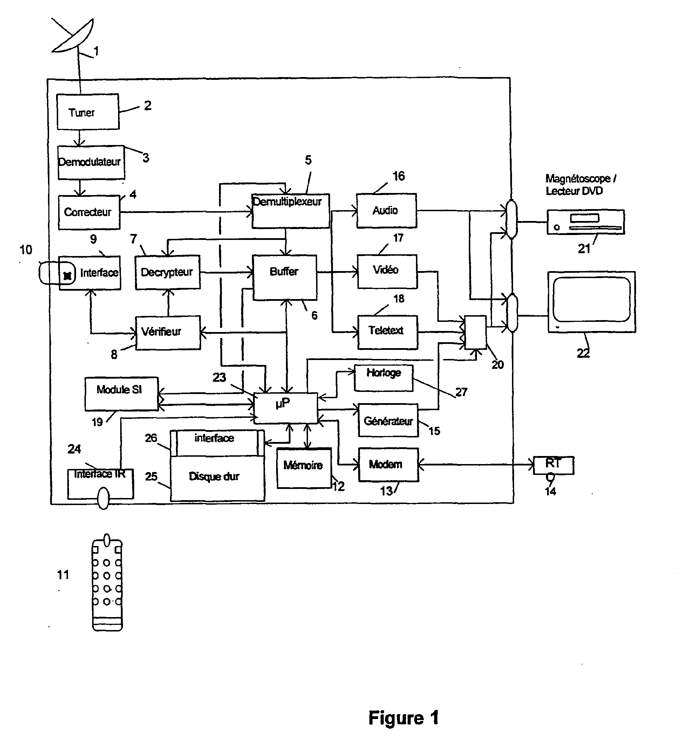

Un récepteur selon l'invention est décrit à la figure 1. Le récepteur est, par exemple, un décodeur conforme aux spécifications DVB et qui utilise une couche transport ISO/IEC 13818-1.

Le décodeur est relié à une antenne 1, elle-même reliée à un syntoniseur (appelé également « tuner »). Nous verrons par la suite qu'il peut y en avoir deux. Le signal fourni par le syntoniseur est démodulé par un démodulateur 3. Les données démodulées sont désentrelacées et corrigées par un circuit correcteur d'erreur 4 et transmises à un démultiplexeur 5. Celui-ci comporte un certain nombre de filtres programmés par un microprocesseur 23 en fonction des diverses applications supportées par le décodeur. Le microprocesseur 23 est connecté à une mémoire 12 comportant le système d'exploitation ainsi que les programmes résidents ou téléchargés de mise en oeuvre d'applications. La mémoire est illustrée sous la forme d'un bloc unique, mais peut physiquement comporter plusieurs blocs de nature différente : mémoire vive RAM, mémoire morte ROM, mémoire reprogrammable EEPROM ou FLASH. Le microprocesseur est également connecté à un circuit d'horloge 27. Un générateur de caractères 15 permet la génération de menus de commande ou de graphiques relatifs aux paramètres du décodeur ou à une application particulière. Le signal vidéo généré est multiplexé avec l'un des signaux vidéo en provenance du décodeur vidéo 17 vers une prise Péritel (prise SCART en anglais) reliée à un écran de télévision 22. Le circuit de multiplexage 20 est géré par le microprocesseur 23. Pour la clarté du schéma, seules les connexions les plus importantes du microprocesseur 23 sont illustrées.

Les sections ou paquets audio ou vidéo filtrés par le démultiplexeur sont stockés dans des zones prédéfinies d'une mémoire tampon 6. Le décodeur peut également disposer d'un disque dur 25 relié au microprocesseur à l'aide d'une interface 26 permettant des transferts rapides d'informations. Le décodeur est aussi doté d'une télécommande 11, reliée au microprocesseur par une liaison infrarouge.

On a dit précédemment que le réseau de diffusion peut être unidirectionnel (réseau hertzien ou par satellite) ou bidirectionnel (par fil, câble, INTERNET par exemple). En effet, il n'est pas utile que le récepteur envoie des messages au diffuseur par le même moyen de communication que le réseau de diffusion des données audiovisuelles. Le réseau de diffusion émet des services dits généraux, l'utilisateur sélectionne parmi eux le service courant pour regarder l'événement courant. Le réseau émet également des services dits « à thème ». Les services à thèmes diffusent en permanence des émissions audiovisuelles courtes (appelées « flash » dans la suite du document) possédant le même thème pour un canal donné. La liste des références d'accès aux services à thèmes ainsi que le thème associé à chaque service est extraite des tables NIT. Un champ propriétaire contient un indicateur spécifiant que le service est « à thème ».

La mémoire programme du décodeur contient un module logiciel de Gestion des Flashs, ou module GF. Une des fonctions de ce module consiste à créer le tableau cité précédemment. Les autres fonctions vont être décrites par la suite.

Le module GF comprend une partie programmation consistant à rechercher les thèmes diffusés et à recevoir de l'utilisateur le critère de sélection des flashs à visualiser.

Tout d'abord, le décodeur analyse les tables NIT afin de déterminer le nombre et le thème des services à thème actuellement diffusés. La table EIT donne notamment la description du contenu des événements (et donc des flashs qui sont des événements courts), grâce à ses descripteurs. Les descripteurs autorisent le codage de données propriétaires au diffuseur permettant ainsi de diffuser selon un format normalisé des contenus (le *content_descriptor* de *tag*). La présente invention introduit de nouveaux champs dans ces descripteurs en y spécifiant : la description d'un flash, le ou les thèmes du flash, le début d'émission (date et heure codées sur 40 bits), la durée (codée sur 24 bits), .... La table EIT contient notamment un champ codé sur 12 bits qui autorise une longueur de 4 093 octets maximum pour le transport des descripteurs.

Ces derniers descripteurs sont utilisés par le diffuseur pour décrire le contenu de l'événement, et donc par exemple le thème auquel il appartient. Ils peuvent être de deux types :

1. les descripteurs " **content_descriptor** " d'identifiant normalisé : 0x54 en hexadécimal,
2. les descripteurs " **user defined"** d'identifiant normalisé de 0x80 à 0xFE en hexadécimal.

Si on utilise le descripteur de type " **content_descriptor** " pour coder le ou les thèmes d'un événement, on dispose d'une taille codée sur 8 bits et donc de 256 octets ce qui est largement suffisant.

Un codage de descripteur que l'on peut recommander est le suivant (décrit comme le sont les descripteurs dans la norme DVB-SI):

```
broadcaster_defined_content_descriptor(){
    descriptor_tag          8 bits uimsbf
    descriptor_length        8 bits uimsbf
   for (i=0; i<N; i++) {
        descriptor_content_byte            8 bits uimsbf
    }
}
```

**avec:**

**descriptor_tag :** compris entre 0x80 et 0xFE

**descriptor_length :** la longueur du contenu du descripteur qui suit le **descriptor_ength,**

**descriptor_content_byte :** le codage du ou des thèmes auquel correspond l'événement, et que souhaite spécifier le diffuseur (normalement le codage doit tenir dans un octet, mais une taille variable du contenu permet d'associer un même événement à plusieurs thèmes).

En analysant le contenu des descripteurs contenus dans les tables EIT, le décodeur crée dans sa mémoire le tableau 1 ci-dessous qui contient la liste des références d'accès aux services à thèmes actuellement diffusés (Id-service_i) et les thèmes et sous thème associés.

TABLEAU 1

| | | |
|---|---|---|
| Information : | Sportives | Id_service_1 |
| | Economiques | Id_service_2 |
| | Politiques | Id_service_3 |
| Publicité : | Loisirs | Id_service_4 |
| | Maison | Id_service_5 |
| | Mode | Id_service_6 |
| | Jeunes | Id_service_7 |

(suite)

| Clips vidéo : | Rap | Id_service_8 |
|---|---|---|
| | Techno | Id_service_9 |
| | Rock | Id_service_10 |
| | Classique | Id_service_11 |
| | Jazz | Id_service_12 |

Dans l'exemple du tableau 1, trois thèmes principaux sont proposés : Information, Publicité et Clips vidéo, et pour l'ensemble de ces trois thèmes, douze sous-thèmes. Le réseau comprend dans l'exemple douze services à thème.

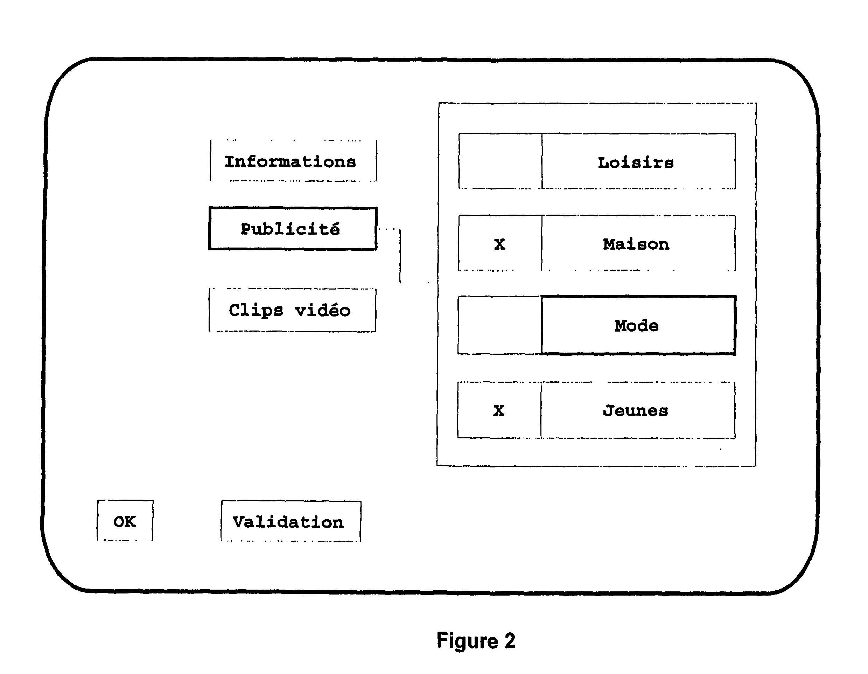

Ensuite, l'utilisateur exécute la partie programmation lui permettant d'introduire le critère de sélection du service à thème. Le menu affiché à la figure 2 apparaît alors, son contenu est directement élaboré à partir du tableau 1. L'utilisateur navigue dans ce menu à l'aide des quatre touches de direction de sa télécommande. La mise en évidence de l'élément pointé s'effectue en mettant soit en gras son contour, soit à l'aide du titre en sur brillance ou en clignotement, soit tout autre moyen de démarquage graphique. La première liste indique le thème, chaque thème donne accès à une seconde liste particulière de sous-thèmes. Dans l'exemple de la figure 2, le thème « Publicité » est sélectionné et le sous-thème « Mode » est mis en évidence. L'utilisateur a actuellement le choix de sélectionner ou non ce critère. Le passage entre les deux listes s'effectue avec les touches " ← " et " → ". La touche "OK " permet de sélectionner ce qui fait apparaître le symbole "X " à gauche du sous-thème signalant ainsi sa sélection. Pour ne plus le sélectionner, il suffit de re-appuyer sur la touche "OK". La touche " validation " valide l'ensemble de la sélection et fait quitter la partie programmation du module GF.

Si l'utilisateur ne sélectionne rien, le module GF ne sera pas opérationnel, les séquences de flashs initialement prévues par le diffuseur ne seront pas remplacées. Sinon, à la suite de l'exécution de la partie programmation du module GF, le décodeur programme son démultiplexeur et son second syntoniseur s'il en possède, pour recevoir les données du service correspondant au premier sous-thème sélectionné. Si par la suite, ce service cesse d'émettre, le décodeur passe sur un autre service sélectionné.

Le principe général du module GF en cours de fonctionnement est montré à la figure 3. Un événement extrait du service courant est visualisé. A un certain moment, le diffuseur émet dans les données de ce service et entre deux blocs de données audiovisuelles, un signal d'annonce spécifiant qu'une séquence d'une certaine durée va bientôt être diffusée. Au moment spécifié dans le signal d'annonce, le décodeur programme son démultiplexeur pour recevoir les données du service diffusant des flashs correspondant aux critères définis par l'utilisateur. Par exemple, l'utilisateur préférant les publicités relatives à la mode, le démultiplexeur sélectionne le service diffusant des flashs ayant pour thème « Mode ». Si l'utilisateur a choisi plusieurs thèmes, les services les diffusant sont successivement sélectionnés par le module GF. Lorsque tous ont été visualisé une fois, le premier est de nouveau sélectionné. Cette sélection s'effectue à l'aide d'un pointeur adressant dans le tableau 1 les services dont les thèmes sont choisis par l'utilisateur. A la fin de la durée spécifiée dans le signal d'annonce, le démultiplexeur est de nouveau programmé pour recevoir les données du service courant qui sont envoyées à l'écran de télévision.

Le signal d'annonce comprend les informations suivantes :

| Identifiant service | Temps courant | Instant t1 | Durée D1 |
|---|---|---|---|

Avantageusement, le signal d'annonce est répété plusieurs fois pour être bien reçu par tous les décodeurs. Grâce à la donnée " Temps courant ", le décodeur resynchronise son horloge pour commencer à l'instant précis $t1$ la visualisation de la séquence d'une durée $D1$.

Selon un mode très simplifié de réalisation, le diffuseur n'envoie qu'un seul signal d'annonce à l'instant de début de la séquence. Dans ce signal, les champs "Temps courant" et "instant t1" sont inutiles et peuvent être supprimés.

Les flashs sont diffusés en permanence dans les services à thème. Le début de la séquence (instant T1) ne coïncide généralement pas avec celui d'un flash. Pour ne pas commuter au cours de la diffusion d'un flash et de ce fait manquer une partie, le décodeur envoie à l'écran un événement de remplissage.

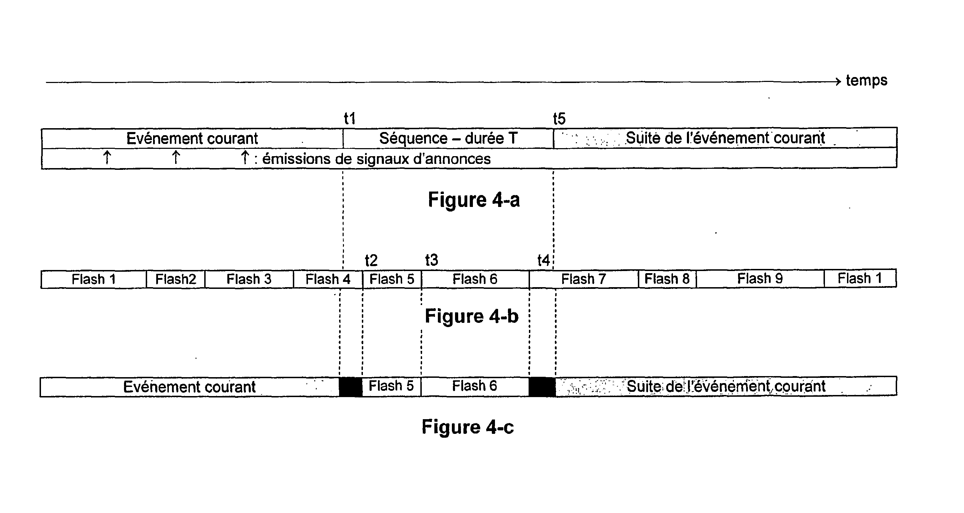

Les figures 4 montrent la chronologie des émissions diffusées sur le service courant (figure 4-a), le service à thème (figure 4-b) et les émissions visualisées à l'écran (figure 4-c). Elles montrent notamment le moment d'émission de l'événement de remplissage. Les signaux d'annonce émis entre les blocs de données audiovisuelles de l'événement courant contiennent une donnée indiquant la diffusion à l'instant $t1$ d'une séquence. Cette séquence contient des flashs dont les thèmes sont divers. Elle est visualisée lorsque l'utilisateur ne spécifie aucun critère ou lorsque le décodeur n'est pas doté du module GF. Dans le même temps, le service à thème émet continuellement des flashs en boucle. Dans l'exemple de la figure 4-b, le service à thème affiché émet 9 flashs différents ayant le même thème.

Selon un premier mode de réalisation, la commutation entre le service courant et un service à thème s'effectue directement. Ce premier mode est simple mais présente l'inconvénient de couper les flashs. La description qui va suivre intègre le perfectionnement qui permet de résoudre ce problème.

L'instant t1 intervient au moment de la diffusion du flash 4. Le flash 5 qui est diffusé au moment t2 après t1, peut être visualisé en entier. Pour éviter de ne visualiser qu'une partie du flash 4, le décodeur envoie à l'écran au cours du moment délimité par t1 et t2, un événement de remplissage. Un événement de remplissage possède un contenu audiovisuel dont la durée de visualisation n'a pas d'importance pour le spectateur. C'est par exemple une image fixe agrémentée d'une musique. Cela peut aussi être un documentaire sur une région. L'objectif d'un événement de remplissage est d'occuper l'écran de télévision entre le moment t1 et le début du prochain flash. Il permet également d'éliminer le bref écran noir qui apparaît lors des commutations de service. Au moment t2, le décodeur contrôle que le flash 5 a une durée suffisamment courte pour qu'il soit totalement intégré à la séquence. Puisque c'est le cas, le flash 5 est visualisé. A l'instant t3, le flash 6 est reçu et, après avoir subi le même contrôle, est visualisé. A l'instant t4, le flash 7 est reçu. La durée de ce flash est supérieure à la durée restante de la séquence, il n'y a donc plus assez de temps pour le visualiser. Le module GF envoie à l'écran un événement de remplissage qui est visualisé jusqu'à l'instant t5 qui termine la séquence. Le programme courant est alors de nouveau visualisé.

Avantageusement, l'événement de remplissage est un programme audiovisuel en boucle sans qu'il soit possible de déceler la transition de début et de fin. La durée de la boucle doit être suffisamment longue pour que l'utilisateur ne revoie pas trop souvent les mêmes parties.

Selon un mode préféré de réalisation, l'événement de remplissage est unique et est enregistré dans une mémoire du décodeur. Ainsi, la commutation est rapide et ne laisse apparaître aucun écran noir à l'écran. La taille de la mémoire occupée est généralement courte (surtout si cet événement est une photo avec une musique), l'événement de remplissage peut être stocké dans une partie de la mémoire de travail, ou s'il est trop long, dans le disque dur 25.

Une variante consiste en ce que le réseau émette en plus des services à thème un service dit " de remplissage " diffusant constamment un événement de remplissage. Selon cette variante, le module GF recherche dans ce service l'événement de remplissage et le stocke en mémoire. Le diffuseur peut changer l'événement de remplissage, par exemple, une fois par jour.

Au moment précis spécifié par le diffuseur dans le signal d'annonce, l'événement interrompu par la séquence doit reprendre. Les données sélectionnées pour l'affichage sont alors commutées du service diffusant des émissions de second type vers le service courant.

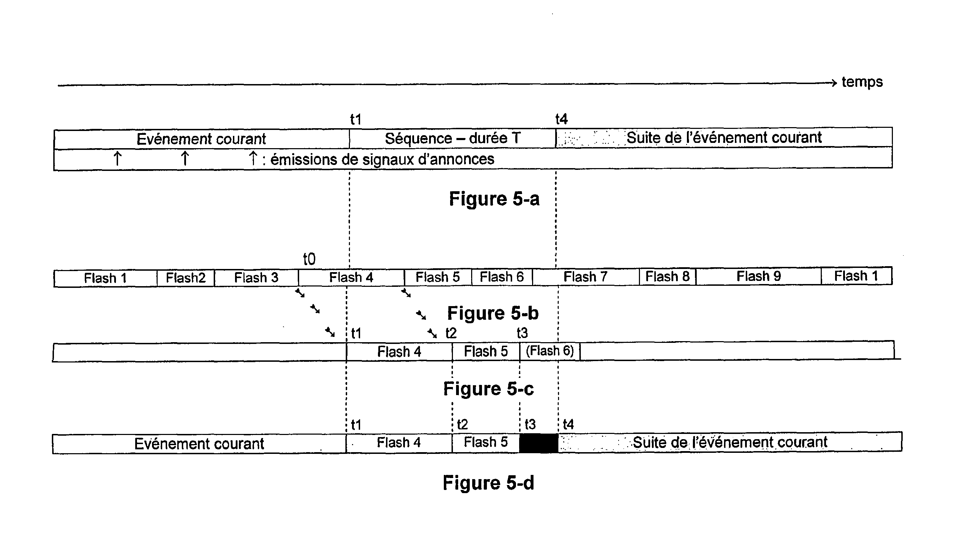

Un perfectionnement de la présente invention consiste à utiliser une mémoire de grande capacité pour enregistrer au moins un flash. Cette mémoire peut être constituée d'un circuit mémoire de grande capacité, ou d'un petit disque dur (tel que celui représenté en 25 dans la figure 1), ou d'une bande magnétique. Selon le présent perfectionnement, le décodeur enregistre constamment le flash diffusé par le service à thème sélectionné, c'est-à-dire le " flash courant ". Un nouveau flash reçu écrase le précédent. Les figures 5 montrent la chronologie des émissions diffusées sur le service courant (figure 5-a), le service à thème (figure 5-b), l'émission lue de la mémoire par le module GF (figure 5-c) et les émissions visualisées à l'écran (figure 5-d).

Lorsque la séquence commence (instant t1), le module GF arrête la visualisation de l'événement courant et lit le contenu de la mémoire de flash au début de l'enregistrement du flash en cours de diffusion. Ce flash (4) a commencé à être diffusé à l'instant t0 et il est lu à l'instant T1. Il se produit un décalage temporel de (t1 - t0) entre la réception et la visualisation du flash 4 et de ceux qui vont ensuite être visualisé. Pour cette raison, cet équipement est appelé « Time Shifter » en anglais. A la fin de la visualisation du flash 4 (instant t2), le module GF détermine si le prochain flash (flash 5) peut être totalement visualisé avant la fin de la séquence. C'est le cas : le flash 5 est donc envoyé à l'écran. A la fin de la visualisation du flash 5, le module GF contrôle si le flash 6 peut aussi être visualisé mais ce n'est pas le cas. Le module GF complète le reste de la séquence à afficher avec un événement de remplissage jusqu'à l'instant t4 où l'événement courant recommence à être visualisé. De cette manière, la séquence visualisée possède la durée spécifiée par le diffuseur. Ce perfectionnement permet de diminuer dans certain cas le temps de visualisation de l'événement de remplissage et de rajouter un flash dans la séquence.

Un perfectionnement de la présente invention consiste en ce que l'utilisateur programme la répartition des thèmes. L'utilisateur spécifie pour chacun des thèmes présents dans le tableau 1 la proportion d'affichage qu'il désire. Les proportions sont avantageusement indiquées en pourcentage, le total des valeurs indiquées étant de 100.

Le tableau 2 ci-dessous est un exemple de programmation de la répartition des rubriques. Dans l'exemple, l'utilisateur préfère surtout les flashs de clips vidéo de rap (il en veut 50%), puis les publicités pour la maison (30%) et enfin, les informations sportives (20%).

TABLEAU 2

| Information | Sportives | Id_service_1 | 20 |
|---|---|---|---|

(suite)

| | | | |
|---|---|---|---|
| | Economiques | Id_service_2 | 0. |
| | Politiques | Id_service_3 | 0 |
| Publicité : | Loisirs | Id_service_4 | 0 |
| | Maison | Id_service_5 | 30 |
| | Mode | Id_service_6 | 0 |
| | Jeunes | Id_service_7 | 0 |
| Clips vidéo : | Rap | Id_service_8 | 50 |
| | Techno | Id_service_9 | 0 |
| | Rock | Id_service_10 | 0 |
| | Classique | Id_service_11 | 0 |
| | Jazz | Id_service_12 | 0 |

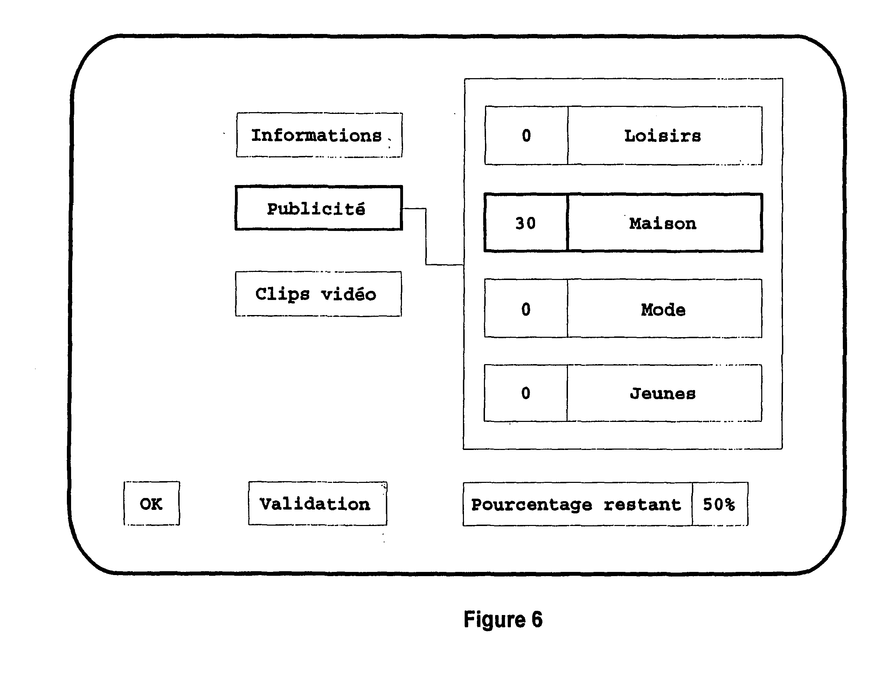

L'utilisateur spécifie les proportions dans le menu de la figure 6 en lançant la partie programmation du module GF et en introduisant à l'aide du clavier numérique de sa télécommande un nombre entier de 0 à 100. L'icône en bas à gauche indique à l'utilisateur le pourcentage qu'il lui reste à affecter. Dans l'exemple, il a spécifié 20% de flashs d'information sportive, 30% de flashs de publicité pour la maison, il lui reste donc 50% de flashs à affecter sur un ou plusieurs autres rubriques. L'utilisateur peut évidemment revenir sur un choix à l'aide des boutons de navigation.

Une variante, visant à simplifier l'introduction des choix, consiste en ce que l'utilisateur attribue une échelle, par exemple de 0 à 9, pour chaque thème de flash. Le module GF convertit ensuite les valeurs introduites en pourcentage.

L'utilisateur ayant validé ses choix, le module GF crée le tableau 3 ci-dessous en mémoire, celui-ci possède autant de lignes qu'il y a de rubriques pour lesquelles l'utilisateur a spécifié un nombre non nul. Le tableau contient quatre colonnes. La première et la seconde colonne identifient le service à thème. La troisième contient les pourcentages programmés par l'utilisateur pour chaque rubrique. La quatrième contient des compteurs pour déterminer le nombre de flashs qui ont déjà été visualisés. La quatrième colonne du tableau est mise à jour lors de chaque visualisation de séquence en incrémentant la valeur du compteur. Au début de l'affichage d'une séquence et à la fin de chaque visualisation d'un flash, le tableau est lu et analysé par le module GF en fonctionnement normal afin de déterminer le service à thème dans lequel le décodeur doit chercher le flash à visualiser.

TABLEAU 3

| | | | |
|---|---|---|---|
| Information / Sportives | Id_service_1 | 20 (%) | 1 |
| Publicité / Maison | Id_service_5 | 30 (%) | 1 |
| Clips vidéo / Rap | Id_service_8 | 50 (%) | 1 |

Dans l'exemple du tableau 3 ci-dessus, le module GF sélectionnera une fois le service à thème diffusant « Information/Sportives », puis deux fois « Publicité / Maison » et enfin quatre fois « Clips vidéo / Rap ». D'une façon simple, la sélection s'effectue par balayage chronologique du tableau.

Une première façon d'opérer consiste à mettre à jour les compteurs avec les valeurs programmées par l'utilisateur et à les décrémenter lors de chaque visualisation. Lorsque tous les compteurs sont à 0, ils sont remis à jour avec les valeurs programmées. Une première façon de faire consiste en ce que les compteurs comptabilisent un nombre de flashs visualisés. Une autre méthode consiste à comptabiliser le temps de visualisation pour chaque thème. Dans ce dernier cas, on comptabilise des secondes en additionnant dans chaque compteur les durées (en secondes) des flashs pour chaque thème.

Une variante consiste à imposer que la valeur minimale de chaque thème soit égale à 1, y compris pour celles que l'utilisateur annonce sans intérêt et pour lequel il programme une valeur nulle. Cette variante permet au diffuseur de s'assurer que chaque thème sera vu au moins une fois au bout d'un certain temps, et ceci en respectant les proportions d'affichage attendues pour peu que les valeurs pour les thèmes à fort intérêt pour l'utilisateur aient des valeurs suffisamment grandes. Cette variante impose que le tableau 3 contiennent autant de lignes qu'il y a de thèmes diffusés et donc de services à thèmes.

Une autre variante consiste à utiliser une suite géométrique pour faire évoluer la valeur de départ des compteurs.

Dans cette variante la valeur de départ d'un compteur est égale à *k* fois (*k* > 1) la valeur du compteur pour le thème d'intérêt immédiatement inférieur. L'utilisateur fournit donc un ordonnancement des thèmes qui lui sont proposés. Cet ordonnancement est par exemple, du plus intéressant au moins intéressant. On obtient alors :

- pour p[j] le poids du j-ième thème (0 est l'indice du thème le moins intéressant et n-1 l'indice du thème le plus intéressant, pour n thèmes possibles), et pour k > 1 on choisit :

$$p[i] = k * p[i-1], \text{ avec } p[0] = 1 .$$

Tout d'abord, on associe à chaque thème un compteur, initialisé au départ avec les valeurs successives de la suite p[i], en associant p[0] au thème le moins préféré et p[n-1] au thème le plus préféré. On décrémente ensuite de 1 le compteur associé à chaque fois qu'un thème est affiché. Ainsi la fonction désirée est bien réalisée.

De cette façon, le diffuseur maîtrise parfaitement les probabilités d'affichage de chaque thème. On démontre en effet par récurrence que :

$$\text{Somme ( pour } i=0 \text{ à } n-1) [ k^i ] = ( (k^n) - 1 ) / ( k-1 ).$$

Cela montre que, pour k=2 par exemple, le thème désigné comme le plus souhaité sera affiché environ 50% du temps, le thème suivant 25%, le thème suivant 12.5%, etc et pour k=3, les probabilités deviennent : 67%, 22%, 7%, etc et pour k=4 : 75%, 19%, 5%, etc

Un perfectionnement consiste à affecter une priorité aux flashs. Pour cela, le diffuseur implémente un drapeau de priorité dans chaque descripteur de flash indiquant de façon simple si celui-ci est ou non est prioritaire. On rappelle que ce descripteur est dans une table EIT et qu'ainsi le décodeur connaît le thème, la durée et la priorité de tous les flashs diffusés par tous les services à thème. Le décodeur reçoit cet indicateur et le module GF le traite de la façon suivante : lorsqu'un choix de service à thème est possible, le module GF choisit le service dont les flashs prioritaires diffusés pendant la séquence annoncée sont les plus nombreux. Dans l'exemple illustré par le tableau 3, le module GF peut en fait afficher indifféremment « Information/Sportives », « Publicité / Maison » , ou « Clips vidéo / Rap . Selon le perfectionnement, il analyse la priorité des flashs émis par les trois services à thèmes au cours de la séquence et sélectionne le service à thème qui possède le plus grand nombre de flashs prioritaires au cours de la séquence. Avantageusement pour lui, le diffuseur peut demander un prix plus élevé aux fournisseurs qui demandent une priorité élevée pour leurs flashs.

Une variante du perfectionnement consiste à affecter à chaque thème un niveau de priorité au lieu d'un drapeau dont la valeur est binaire. Par exemple, ce niveau prend les valeurs de 0 à 4, la valeur 4 étant celle de plus forte priorité. Selon cette variante, le module GF additionne les niveaux de priorité des flashs diffusés par les services sélectionnables et au cours de la séquence annoncée, et sélectionne celui qui possède la plus haute valeur.

Une autre variante de ce perfectionnement consiste à affecter à chaque thème un poids désigné par le diffuseur, ce qui permet de rendre prioritaires certains thèmes. Ce poids est utilisé conjointement au poids désigné par l'utilisateur (par exemple par addition des deux poids), et modifie ainsi les valeurs prises en compte pour les compteurs au moment de la sélection d'un thème. Cette variante permet au diffuseur de " forcer ", au niveau des récepteurs, l'affichage des flashs diffusés par un service à thème déclaré prioritaire.

Une variante consiste en ce que le récepteur détermine automatiquement le profil de l'utilisateur et corrèle ce profil avec les thèmes proposés. Il n'y a donc plus besoin de la phase de programmation manuelle illustrée par la figure 2. Le profil peut par exemple être déterminé à partir des actions de l'utilisateur face à certain flash au cours d'une phase d'apprentissage. Par exemple, si l'utilisateur change souvent de services lorsqu'il voit des flashs de publicité dans le domaine de la mode, le module GF en déduit qu'il ne faut plus lui présenter des flashs de ce thème. Il diminue alors la proportion dédiée à ce thème, de 10 % par exemple. Au fur et à mesure de la visualisation des séquences, le récepteur affine le profil de l'utilisateur. Supposons que des thèmes de flash soient en relation avec des événements, lorsque l'utilisateur demande à voir ces événements, le module GF augmente la proportion des thèmes correspondants. Par exemple, si un utilisateur demande à voir fréquemment le journal télévisé (qui est un événement), le module GF est averti et augmente de 10% par exemple, la proportion du thème « information ».

Un perfectionnement consiste en ce que le module GF prenne en compte plusieurs utilisateurs. La partie programmation débute alors par l'introduction d'un identifiant d'utilisateur, chaque utilisateur introduit son profil ou la répartition des thèmes qu'il désire voir apparaître dans les flashs. La partie programmation du module GF crée alors autant de tableaux de répartition que d'utilisateurs. Lors de l'exécution normale, les utilisateurs s'identifient, un seul profil ou tableau de répartition est actif à la fois.

Si le décodeur ne dispose que d'un seul syntoniseur, les programmes et la signalisation doivent être multiplexés sur un même canal sous la forme de paquets de données référencés par des PID différents. Des décodeurs « haut de gamme » disposent de deux syntoniseurs pour recevoir des signaux provenant de deux canaux de diffusion de fréquence différente. Dans ce cas, un perfectionnement consiste à programmer un syntoniseur pour recevoir l'événement courant et les signaux d'annonces, et l'autre le service à thème sélectionné par le module GF. Les données sont stockées en parallèle dans la mémoire au fur et à mesure de la réception. La commutation entre l'événement courant et les flashs se situe alors au niveau du processus de lecture de la mémoire.

L'invention n'est bien sûr pas limitée aux modes de réalisation qui viennent d'être décrits.

## Revendications

1. Procédé de visualisation d'émissions audiovisuelles émises par un central et reçues par un récepteur de télévision, comportant au niveau du récepteur:

   - une première étape de sélection par l'utilisateur d'un premier service de diffusion diffusant des émissions audiovisuelles et visualisation d'une desdites émissions diffusées,
   - une seconde étape de visualisation d'une séquence, par exemple publicitaire (Flash), extraite d'un second service parmi une pluralité de seconds services de diffusion sélectionné par le récepteur en fonction de critères enregistrés dans le récepteur et propres à l'utilisateur,
   - une troisième étape de visualisation de l'émission audiovisuelle diffusée par le service sélectionné par l'utilisateur, cette étape commençant à un second moment (t5) spécifié par un signal d'annonce diffusé par le premier service et spécifié par le central,

   et **caractérisé en ce qu'**il comporte une quatrième étape de visualisation d'une émission de remplissage (■) commençant à un premier moment (t1) spécifié par un signal d'annonce diffusé par le premier service et spécifié par le central, et se terminant au début de la seconde étape de visualisation, et une cinquième étape de visualisation d'une émission de remplissage (■) commençant à la fin de la seconde étape de visualisation et se terminant au second moment (t5), l'émission de remplissage étant extraite d'un troisième service ou enregistrée en mémoire du récepteur

2. Procédé de visualisation d'émissions audiovisuelles émises par un central et reçues par un récepteur de télévision, comportant au niveau du récepteur:

   - une première étape de sélection par l'utilisateur d'un premier service de diffusion diffusant des émissions audiovisuelles et visualisation d'une desdites émissions diffusées, **caractérisé en ce qu'**il comporte en outre :
   - une étape d'enregistrement d'une séquence, par exemple publicitaire (Flash), extraite d'un second service parmi une pluralité de seconds services de diffusion sélectionné par le récepteur en fonction de critères enregistrés dans le récepteur et propres à l'utilisateur,
   - une seconde étape de visualisation d'une séquence extraite de la mémoire du récepteur à un moment (t1) spécifié par un signal d'annonce diffusé par le premier service et spécifié par le central,
   - une troisième étape de visualisation de l'émission audiovisuelle diffusée par le service sélectionné par l'utilisateur, cette étape commençant à un second moment (t4) spécifié par un signal d'annonce diffusé par le premier service et spécifié par le central,
   - et une quatrième étape de visualisation d'une émission de remplissage (■) commençant à la fin de la seconde étape de visualisation et se terminant au second moment (t4), l'émission de remplissage étant extraite d'un troisième service ou enregistrée en mémoire du récepteur.

3. Procédé de visualisation d'émissions audiovisuelles selon la revendication 1, **caractérisé en ce que** l'émission de remplissage (■) est enregistrée dans le récepteur.

4. Procédé de visualisation d'émissions audiovisuelles selon la revendication 3, **caractérisé en ce que** l'émission de remplissage (■) est extraite d'un service de diffusion spécifique avant d'être enregistrée.

5. Procédé de visualisation d'émissions audiovisuelles selon la revendication 4, **caractérisé en ce que** l'émission de remplissage (■) est régulièrement enregistrée dans la mémoire du récepteur.

**6.** Récepteur d'émissions audiovisuelles comportant un moyen de réception de données (3, 4, 5) diffusées à partir d'un réseau constitué au moins d'un premier service sélectionné par l'utilisateur diffusant des émissions audiovisuelles et d'une pluralité de seconds services diffusant des séquences par exemple publicitaires, d'un moyen de sélection d'un second service de diffusion sélectionné par le récepteur en fonction de critères enregistrés dans le récepteur et propres à l'utilisateur, d'un moyen de commutation (23, 12) entre un premier service et un second service pour diriger les émissions vers un moyen (20) pour envoyer les émissions audiovisuelles et les séquences par exemple publicitaires ainsi sélectionnées vers un organe de visualisation (22), **caractérisé en ce qu'**il comprend un moyen (23, 12) pour intercaler une émission de remplissage (■), l'émission de remplissage étant intercalée entre une séquence, par exemple publicitaire (Flash), diffusée par le second service et l'émission audiovisuelle reprise à un second moment (t4, t5) spécifié par le premier service, l'émission de remplissage étant extraite d'un troisième service ou enregistrée en mémoire du récepteur.

**7.** Récepteur d'émissions audiovisuelles selon la revendication 6 **caractérisé en ce qu'**il comporte une mémoire (25) pour enregistrer au moins une séquence par exemple publicitaire reçue d'un second service, et un moyen de lecture de la mémoire à un premier moment (t1) spécifié par le premier service pour lire une séquence par exemple publicitaire et la visualiser sur l'organe de visualisation (22), le moyen de commutation (23, 12) dirigeant les séquences enregistrées vers le moyen (20) pour intercaler une émission de remplissage n'intervenant qu'entre une séquence diffusée par le second service et l'émission audiovisuelle reprise au second moment (t4).

**8.** Récepteur d'émissions audiovisuelles selon l'une des revendications 6 ; **caractérisé en ce qu'**il comporte une mémoire (25) contenant l'émission de remplissage.

**9.** Récepteur d'émissions audiovisuelles selon la revendication 8 ; **caractérisé en ce qu'**il comporte un moyen de réception (3, 4, 5) d'une émission de remplissage (■) à partir d'un service spécifique, la dite émission étant ensuite enregistrée.

**10.** Récepteur d'émissions audiovisuelles selon l'une des revendications 6 à 9 ; **caractérisé en ce que** l'émission de remplissage est un programme audiovisuel en boucle.

**11.** Récepteur d'émissions audiovisuelles selon l'une des revendications 6 à 9 ; **caractérisé en ce que** l'émission de remplissage est une photo accompagnée d'un contenu sonore.

**Claims**

**1.** Process for screening audiovisual transmissions transmitted by a centre and received by a television receiver, the process comprising at the receiver level:

- a first step of selection by the user of a first broadcasting service broadcasting audiovisual transmissions and screening of said broadcast audiovisual transmissions
- a second step of screening of a sequence, for example an advertisement (Flash), extracted from a second broadcasting service among a plurality of second broadcasting services selected by the receiver according to criteria recorded in the receiver and proper to the user,
- a third step of screening of the audiovisual transmissions broadcast by the service selected by the receiver, this step beginning at a second moment (t5) specified by an announcement signal broadcast par the first service and specified by the centre,

and **characterized in that** it comprises a fourth step of of screening of a filler transmission beginning at a first moment (t1) specified by an announcement signal broadcast par the first service and specified by the centre, and stopping at the beginning of the second step of screening a transmission, and a fifth step of screening of a filler transmission beginning at the end of the second step of screening and stopping at the second moment (t5), the filler transmission being extracted from a third service or recorded in the memory of the receiver.

**2.** Process for screening audiovisual transmissions transmitted by a centre and received by a television receiver, comprising at the receiver level :

- a first step of selection by the user of a first broadcasting service broadcasting audiovisual transmissions and screening of said broadcast audiovisual transmissions, **characterized in that** it further comprises

- a step of recording of a sequence, for example an advertisement (Flash), extracted from a second broadcasting service among a plurality of second broadcasting services selected by the receiver according to criteria recorded in the receiver and proper to the user,

- a second step of screening of a sequence extracted from the memory of the receiver at a moment (t1) specified by an announcement signal broadcast par the first service and specified by the centre,

- a third step of screening of the audiovisual transmissions broadcast by the service selected by the receiver, this step beginning at a second moment (t4) specified by an announcement signal broadcast par the first service and specified by the centre,

and a fourth step of screening of a filler transmission beginning at the end of the second step of screening and stopping at the second moment (t4), the filler transmission being extracted from a third service or recorded in the memory of the receiver.

3. Process for screening audiovisual transmissions according to Claim 1, **characterized in that** the filler transmission is recorded in the receiver.

4. Process for screening audiovisual transmissions according to Claim 3, **characterized in that** the filler transmission is extracted from a specific broadcasting service before being recorded.

5. Process for screening audiovisual transmissions according to Claim 4, **characterized in that** the filler transmission is regularly recorded in the memory of the receiver.

6. Receiver of audiovisual transmissions comprising a means of receiving (3,4,5) data broadcast from a network consisting of at least one first service selectable by the user broadcasting audiovisual transmissions and a plurality of second services broadcasting sequences for example advertisements, a means of selection of a second broadcasting service selected by the receiver according to criteria recorded in the receiver and proper to the user, a means of switching (23,12) from one service to another service for sending the transmissions to a means (20) for sending the audiovisual transmissions and the sequences for example advertisements thus selected to the screening facility (22), **characterized in that** it comprises a means (23, 12) for interposing a filler transmission, the filler transmission being interposed between a sequence for example advertisements (Flash), broadcast by the second service and the audiovisual transmission taken again at a second moment (t4, t5) specified by the first service, the filler transmission being extracted from a third service or recorded in the memory of the receiver.

7. Receiver of audiovisual transmissions according to Claim 6, **characterized in that** it comprises a memory (25) for recording at least a sequence for example advertisement received from a second service, and a means for reading the memory at a first moment (t1) specified the first service for reading a sequence for example advertisement and for screening it on the screening facility (22), the means of switching (23,12) sending the recorded transmissions to the means (20) for interposing a filler transmission occurring only between a sequence broadcast by the second service and an audiovisual transmission taken again at the second moment (t4)

8. Receiver of audiovisual transmissions according to claim 6, **characterized in that** it comprises a memory (25) containing the filler transmission.

9. Receiver of audiovisual transmissions according to claim 8, **characterized in that** it comprises a means of reception (3,4,5) of a filler transmission from a specific service, the said transmission being recorded thereafter.

10. Receiver of audiovisual transmissions according to one of claims 6 to 9, **characterized in that** the filler transmission is a looped audiovisual program.

11. Receiver of audiovisual transmissions according to one of claims 6 to 9, **characterized in that** the filler transmission is a picture accompanied by a sound content.

**Patentansprüche**

1. Verfahren zur Anzeige von audiovisuellen Sendungen, die von einer Vermittlungsstelle ausgestrahlt und von einem Fernsehempfänger empfangen werden, mit folgenden Schritten am Empfänger:

- einem ersten Schritt des Auswählens eines ersten audiovisuelle Sendungen ausstrahlenden Broadcast-Dienstes durch den Benutzer und des Anzeigens einer der ausgestrahlten Sendungen,
- einem zweiten Schritt des Anzeigens einer Sequenz, beispielsweise einer Werbesequenz (Flash), die aus einem zweiten Dienst unter einer Vielzahl zweiter Broadcast-Dienste extrahiert wird, welcher Dienst durch den Empfänger in Abhängigkeit von Kriterien ausgewählt wird, die in dem Empfänger gespeichert sind und benutzereigen sind,
- einem dritten Schritt des Anzeigens der audiovisuellen Sendung, die von dem durch den Benutzer ausgewählten Dienst ausgestrahlt wird, wobei dieser Schritt zu einem zweiten Zeitpunkt (t5) beginnt, der durch ein Meldesignal vorgegeben wird, das durch den ersten Dienst ausgestrahlt und durch die Vermittlungsstelle vorgegeben wird,

**dadurch gekennzeichnet, dass** es einen vierten Schritt des Anzeigens einer Füllsendung (■), der zu einem ersten Zeitpunkt (t1) beginnt, der durch ein Meldesignal vorgegeben wird, das durch den ersten Dienst ausgestrahlt und durch die Vermittlungsstelle vorgegeben wird, und der zu Beginn des zweiten Schritts des Anzeigens endet, und einen fünften Schritt des Anzeigens einer Füllsendung (■) umfasst, der am Ende des zweiten Schritts des Anzeigens beginnt und zum zweiten Zeitpunkt (t5) endet, wobei die Füllsendung aus einem dritten Dienst extrahiert wird oder in dem Empfänger gespeichert ist.

2.  Verfahren zur Anzeige von audiovisuellen Sendungen, die von einer Vermittlungsstelle ausgestrahlt und von einem Fernsehempfänger empfangen werden, mit folgenden Schritten am Empfänger:

- einem ersten Schritt des Auswählens eines ersten audiovisuelle Sendungen ausstrahlenden Broadcast-Dienstes durch den Benutzer und des Anzeigens einer der ausgestrahlten Sendungen,

**dadurch gekennzeichnet, dass** es ferner umfasst:

- einen Schritt der Aufnahme einer Sequenz, beispielsweise einer Werbesequenz (Flash), die aus einem zweiten Dienst unter einer Vielzahl zweiter Broadcastdienste extrahiert wird, welcher Dienst durch den Empfänger in Abhängigkeit von Kriterien ausgewählt wird, die in dem Empfänger gespeichert sind und benutzereigen sind,
- einen zweiten Schritt des Anzeigens einer Sequenz, die aus dem Speicher des Empfängers zu einem Zeitpunkt (t1) extrahiert wird, welcher durch ein Meldsignal vorgegeben wird, das durch den ersten Dienst ausgestrahlt und durch die Vermittlungsstelle vorgegeben wird,
- einen dritten Schritt des Anzeigens der audiovisuellen Sendung, die von dem durch den Benutzer ausgewählten Dienst ausgestrahlt wird, wobei dieser Schritt zu einem zweiten Zeitpunkt (t4) beginnt, der durch ein Meldesignal vorgegeben wird, das durch den ersten Dienst ausgestrahlt und durch die Vermittlungsstelle vorgegeben wird, und
- einen vierten Schritt des Anzeigens einer Füllsendung (■), der am Ende des zweiten Schritts des Anzeigens beginnt und zu dem zweiten Zeitpunkt (t4) endet, wobei die Füllsendung aus einem dritten Dienst extrahiert wird oder in dem Empfänger gespeichert ist.

3.  Verfahren zur Anzeige von audiovisuellen Sendungen nach Anspruch 1, **dadurch gekennzeichnet, dass** die Füllsendung (■) in dem Empfänger gespeichert ist.

4.  Verfahren zur Anzeige von audiovisuellen Sendungen nach Anspruch 3, **dadurch gekennzeichnet, dass** die Füllsendung (■) aus einem spezifischen Broadcastdienst extrahiert wird, bevor sie gespeichert wird.

5.  Verfahren zur Anzeige von audiovisuellen Sendungen nach Anspruch 4, **dadurch gekennzeichnet, dass** die Füllsendung (■) regelmäßig in den Speicher des Empfängers gespeichert wird.

6.  Empfänger von audiovisuellen Sendungen mit einem Mittel (3, 4, 5), um Daten zu empfangen, die von einem Netzwerk aus ausgestrahlt werden, das mindestens durch einen ersten Dienst, der von dem Benutzer ausgewählt wird und audiovisuelle Sendungen ausstrahlt, und eine Vielzahl zweiter Dienste, die Sequenzen, beispielsweise Werbesequenzen, ausstrahlen, gebildet ist, einem Mittel zum Auswählen eines zweiten Broadcast-Dienstes, der durch den Empfänger in Abhängigkeit von Kriterien ausgewählt wird, die in dem Empfänger gespeichert sind und benutzereigen sind, einem Mittel zum Umschalten (23, 12) zwischen einem ersten Dienst und einem zweiten Dienst, um die Sendungen zu einem Mittel (20) zum Senden der audiovisuellen Sendungen und der Sequenzen, beispielsweise der Werbesequenzen, die derart ausgewählt werden, zu einem Anzeigeorgan (22) zu leiten, **dadurch gekennzeichnet, dass** er ein Mittel (23, 12) umfasst, um eine Füllsendung (■) zwischenzuschalten, wobei die Füllsendung zwischen eine Sequenz, beispielsweise eine Werbesequenz (Flash), die durch den zweiten Dienst ausgestrahlt wird, und die audiovisuelle Sendung, die zu einem zweiten, durch den ersten Dienst vorgegebenen Zeitpunkt (t4, t5) wiederaufgenommen wird, geschaltet wird, wobei die Füllsendung aus einem dritten Dienst extrahiert oder in dem Empfänger gespeichert ist.

7. Empfänger von audiovisuellen Sendungen nach Anspruch 6, **dadurch gekennzeichnet, dass** er einen Speicher (25) umfasst, um mindestens eine Sequenz, beispielsweise eine Werbesequenz, aus einem zweiten Dienst zu speichern, und ein Mittel, um den Speicher zu einem ersten Zeitpunkt (t1), der durch den ersten Dienst vorgegeben wird, zu lesen, um eine Sequenz, beispielsweise eine Werbesequenz, zu lesen und sie an dem Anzeigeorgan (22) anzuzeigen, wobei das Schaltmittel (23, 12) die gespeicherten Sequenzen zu dem Mittel (20) leitet, um eine Füllsendung zwischenzuschalten, die lediglich zwischen einer durch den zweiten Dienst ausgestrahlten Sequenz und der zum zweiten Zeitpunkt (t4) wiederaufgenommenen audiovisuellen Sendung zum Einsatz kommt.

8. Empfänger von audiovisuellen Sendungen nach Anspruch 6, **dadurch gekennzeichnet, dass** er einen Speicher (25) umfasst, der die Füllsendung enthält.

9. Empfänger von audiovisuellen Sendungen nach Anspruch 8, **dadurch gekennzeichnet, dass** er ein Mittel (3, 4, 5) zum Empfangen einer Füllsendung (■) von einem spezifischen Dienst aus umfasst, wobei die Sendung anschließend gespeichert wird.

10. Empfänger von audiovisuellen Sendungen nach einem der Ansprüche 6 bis 9, **dadurch gekennzeichnet, dass** die Füllsendung ein audiovisuelles Schleifenprogramm ist.

11. Empfänger von audiovisuellen Sendungen nach einem der Ansprüche 6 bis 9, **dadurch gekennzeichnet, dass** die Füllsendung ein Foto mit einem akustischen Inhalt ist.

**Figure 1**

EP 1 295 472 B1

| | Informations | | | Loisirs |
|---|---|---|---|---|

Publicité

Clips vidéo

| | Loisirs |
|---|---|
| X | Maison |
| | Mode |
| X | Jeunes |

OK     Validation

**Figure 2**

EP 1 295 472 B1

| Emission / Film | | Suite de l'Emission / du Film |

- Série de flash thème «loisirs»
- Série de flash thème «Maison»
- Série de flash thème «Mode»
- Série de flash thème «Jeunes»

↑signal d'annonce de la séquence publicitaire

← émission de type 1 →  ←——— émission de type 2 ———→  ←——— émission de type 1 ——→

(Flash)

t1    t5

Figure 3

→ temps

EP 1 295 472 B1

t1           t5

| Evénement courant | Séquence – durée T | Suite de l'événement courant |
|---|---|---|
| ↑     ↑     ↑ : émissions de signaux d'annonces | | |

**Figure 4-a**

t2    t3       t4

| Flash 1 | Flash2 | Flash 3 | Flash 4 | Flash 5 | Flash 6 | Flash 7 | Flash 8 | Flash 9 | Flash 1 |
|---|---|---|---|---|---|---|---|---|---|

**Figure 4-b**

| Evénement courant | ■ | Flash 5 | Flash 6 | ■ | Suite de l'événement courant |
|---|---|---|---|---|---|

**Figure 4-c**

→ temps

| Evénement courant | Séquence – durée T | Suite de l'événement courant |
|---|---|---|
| ↑        ↑        ↑ : émissions de signaux d'annonces | | |

t1 ... t4

**Figure 5-a**

t0

| Flash 1 | Flash2 | Flash 3 | Flash 4 | Flash 5 | Flash 6 | Flash 7 | Flash 8 | Flash 9 | Flash 1 |
|---|---|---|---|---|---|---|---|---|---|

**Figure 5-b**

t1    t2    t3

| Flash 4 | Flash 5 | (Flash 6) | |
|---|---|---|---|

**Figure 5-c**

t1    t2    t3   t4

| Evénement courant | Flash 4 | Flash 5 | | Suite de l'événement courant |
|---|---|---|---|---|

**Figure 5-d**

EP 1 295 472 B1

| 0 | Loisirs |
|---|---------|

| 30 | Maison |
|----|--------|

| 0 | Mode |
|---|------|

| 0 | Jeunes |
|---|--------|

Informations

Publicité

Clips vidéo

OK

Validation

Pourcentage restant | 50%

Figure 6

**RÉFÉRENCES CITÉES DANS LA DESCRIPTION**

**Documents brevets cités dans la description**

• EP 0967804 A